# EUROPÄISCHE PATENTSCHRIFT

(11) **EP 0 554 713 B1**
(45) Veröffentlichungstag und Bekanntmachung des Hinweises auf die Patenterteilung: **26.07.1995**
(21) Anmeldenummer: 93100776.9
(22) Anmeldetag: 20.01.1993
(51) Int. Cl.: F16K 27/00, F15B 13/00

(54) **Ventilblock**
Valve block
Bloc de soupapes

(30) Priorität: 07.02.1992 DE 9201515 U
(43) Veröffentlichungstag der Anmeldung: 11.08.1993
(73) Patentinhaber: ROBERT BOSCH GMBH, 70442 Stuttgart (DE)
(72) Erfinder: Weber, Hans, Dipl.-Ing., W-7000 Stuttgart 30 (DE); Witowski, Edgar, Dipl.-Ing. (FH), W-7255 Rutesheim (DE); Mayer, Guenter, W-7141 Murr (DE)

(56) Entgegenhaltungen:
- DE-U- 9 113 760
- GB-A- 2 199 924
- US-A- 3 111 139
- US-A- 3 493 237
- US-A- 3 879 067
- US-A- 4 482 160

## Beschreibung

### Stand der Technik

Die Erfindung betrifft einen Ventilblock nach der Gattung des Hauptanspruches.

Bei einem bekannten Ventilblock mit auf einem Montageblock angeordnetem Magnetventil kann es vorkommen, daß Feuchtigkeit über den Elektromagneten in das Gehäuseinnere eindringt und an eine Platine gelangt, mit welcher die Kontakte des Elektromagneten in Berührung stehen. Dies führt zum Kurzschluß und damit zum Ausfall des Ventils (GB-A-2 199924).

Ferner ist aus der US-A-3 111 139 ein gattungsbildender Ventilblock bekannt, bei dem die in den Montageblock ragenden Ansätze mit Steckkontakten der Elektromagnete jeweils über einen O-Ring abgedichtet sind, der in einer Bohrung liegt. Dabei ist die Bohrung mit O-Ring in einem gesonderten Bauteil angeordnet, nämlich einem Halsstück, das mittels Schraube auf der eigentlichen Bodenplatte des Montageblocks befestigbar ist. Die zu den Steckkontakten passenden Gegenkontakte, von denen einzelne frei hängende Leitungen wegführen, sind ebenfalls in den verstellbaren Halsstücken befestigt. Für einen Toleranzausgleich muß die Schraube gelost, das Halsstück relativ zur Bodenplatte verschoben und dann befestigt werden.

Ferner ist aus der US-A-3 879 067 eine Dichtunganordnung bekannt, bei der zwei Flüssigkeit führende Leitungen in ein Gehäuse mit Mannloch führen und im Gehäuse jeweils durch einen Lippendichtring abgedichtet sind. Bei dieser Dichtungsanordnung für in der Erde verlegte, Flüssigkeit führende Leitungen tritt das Problem des Toleranzausgleichs von auf Montageblöcken angeordneten Ventilen nicht auf; zudem werden keine elektrischen Bauelemente abgesichert.

### Vorteile der Erfindung

Der erfindungsgemäße Ventilblock mit den kennzeichnenden Merkmalen des Hauptanspruchs hat demgegenüber den Vorteil, daß auf einfache und kostengünstige Weise ein sicheres Abdichten des Elektromagneten mit seinen Steckkontakten erreicht wird, indem alle auftretenden Toleranzen vom Lippendichtring überbrückt werden. Weitere Vorteile der Erfindung ergeben sich aus den Unteransprüchen sowie der nachfolgenden Beschreibung.

### Zeichnung

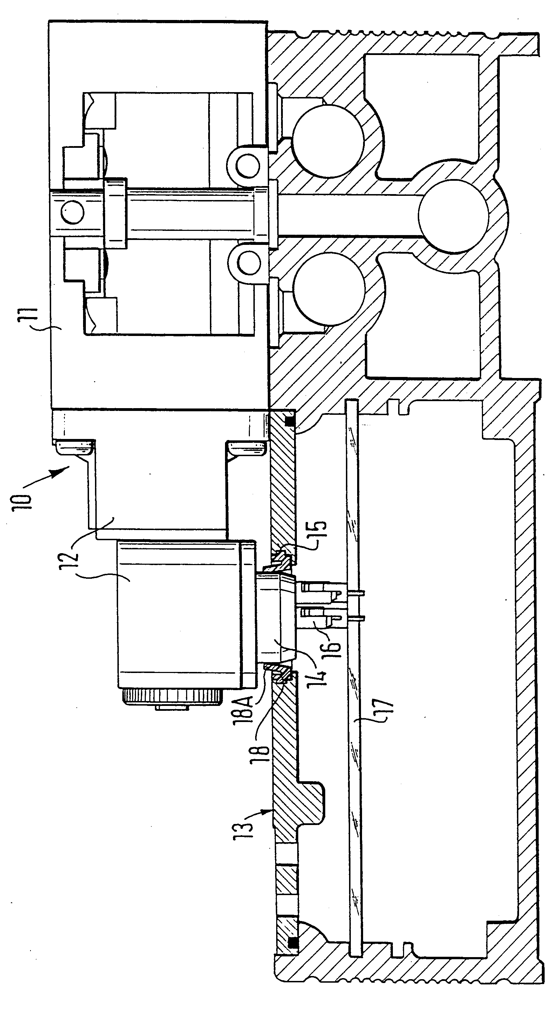

Ein Ausführungsbeispiel der Erfindung ist in der Zeichnung dargestellt, deren einzige Figur einen Längsschnitt durch einen Ventilblock zeigt.

### Beschreibung des Ausführungsbeispiels

Der Ventilblock ist insgesamt mit 10 bezeichnet und besteht im einzelnen aus dem eigentlichen Ventilteil 11 mit weiter nicht dargestellten Steuerteilen und einem an das Ventilteil angeflanschten Elektromagneten 12, dessen Stößel einen Ventilschieber steuert. Diese Teile sind auf einem Montageblock 13 angeordnet, der insbesondere als Ziehprofil ausgebildet ist, entweder einteilig oder zweiteilig.

Der Elektromagnet 12 hat einen zylindrischen Ansatz 14, welcher durch eine Bohrung 15 im Montageblock ragt. Seine Durchschnittsform kann rund, oval oder auch noch anders sein. Zweckmäßig ist, den Ansatz leicht konisch auszubilden. Der Ansatz 14 kann auch ein separates Teil sein und zum Beispiel auf der Spule des Elektromagneten befestigt sein. Die Kontaktstifte 16 des Elektromagneten kontaktieren eine Platine 17, welche sich durch den Montageblock zieht und für die Stromversorgung des Elektromagneten dient. Damit keine Feuchtigkeit oder kein Staub in den Innenraum des Montageblocks 13, insbesondere an die Platine gelangen kann, was einen Kurzschluß zur Folge hätte, befindet sich in der Bohrung 15 ein Lippendichtring 18. Zweckmäßigerweise ist er so eingebaut, daß die Dichtlippe 18A nach oben zum Elektromagneten hinweist. Der Lippendichtring 18 sorgt für eine gute Abdichtung von außen zum Innenraum des Montageblocks hin. Durch den Lippendichtring 18 werden gleichzeitig alle auftretenden Toleranzen überbrückt. Seine Montage ist sehr einfach.

Die Ausbildung des Ventilblocks samt Montageblock hat den Vorteil, daß keine Krafteinwirkung auf die Spule und dadurch auf das Ankersystem des Ventils erfolgt. An die Oberfläche des Ziehprofils werden keine hohen Anforderungen gestellt. Da keine zusätzlichen Querkräfte auf das Ventil einwirken, ist die beschriebene Montageart auch bei kleinen Ventilen bzw. Ventilblöcken möglich. Deshalb entstehen auch keine kritischen Flächenpressungen unterhalb der Befestigungsschrauben des Ventils.

## Patentansprüche

1. Ventilblock mit wenigstens einem Magnetventil (11), dessen Elektromagnet (12) einen zu seiner Längsachse quer verlaufenden zylindrischen Ansatz (14) zur Aufnahme der Steckkontakte (16) aufweist, welcher zylindrische Ansatz (14) mit Steckkontakten (16) durch eine Bohrung (15) in einem Montageblock (13) des Ventilblocks ragt, wobei die Steckkontakte (16) des Elektromagneten nach unten zum Montageblock (13) hin gerichtet und mit Gegenkontakten im Montageblock (13) elektrisch verbunden sind, und der Ansatz (14) dieser Bohrung gegenüber durch einen Dichtring (18) abgedichtet ist, dadurch gekennzeichnet, daß dieser Dichtring ein Lippendichtring (18) ist und die Steckkontakte (16) mit einer im Montageblock (13) angeordneten Platine (17) in Kontakt stehen.

2. Ventilblock nach Anspruch 1, dadurch gekennzeichnet, daß die Lippe (18A) des Lippendichtrings (18) nach oben zum Elektromagnet hin weist.

3. Ventilblock nach Anspruch 1 , dadurch gekennzeichnet, daß der Montageblock (13) als Ziehprofil ausgebildet ist, entweder ein- oder zweiteilig.

4. Ventilblock nach einem der Ansprüche 1 bis 3, dadurch gekennzeichnet, daß der Ansatz (14) eine von einer kreisrunden Form abweichende Querschnittsform (z.B. oval) aufweist.

5. Ventilblock nach einem der Ansprüche 1 bis 4, dadurch gekennzeichnet, daß der zylindrische Ansatz (14) auch leicht kegelig ist.

6. Ventilblock nach einem der Ansprüche 1 bis 5, dadurch gekennzeichnet, daß der zylindrische Ansatz (14) ein separates Zwischenstück ist und auf die Spule des Elektromagneten aufgesteckt und festgeschraubt ist.

## Claims

1. Valve block having at least one solenoid valve (11) whose electromagnet (12) has a cylindrical projection (14), extending transversely with respect to its longitudinal axis, for receiving the plug-in contacts (16), which cylindrical projection (14) projects with plug-in contacts (16) through a hole (15) in a mounting block (13) of the valve block, the plug-in contacts (16) of the electromagnet being directed downwards towards the mounting block (13) and being electrically connected to mating contacts in the mounting block (13), and the projection (14) being sealed with respect to this hole by a sealing ring (18), characterized in that this sealing ring is a lip sealing ring (18) and the plug-in contacts (16) are in contact with a plate (17) arranged in the mounting block (13).

2. Valve block according to Claim 1, characterized in that the lip (18A) of the lip sealing ring (18) points upwards towards the electromagnet.

3. Valve block according to Claim 1, characterized in that the mounting block (13) is constructed as a drawn profile, in either one or two components.

4. Valve block according to one of Claims 1 to 3, characterized in that the projection (14) has a cross-sectional shape (e.g. oval) which deviates from a circular shape.

5. Valve block according to one of Claims 1 to 4, characterized in that the cylindrical projection (14) is also slightly conical.

6. Valve block according to one of Claims 1 to 5, characterized in that the cylindrical projection (14) is a separate intermediate element and is fitted on and screwed tight to the coil of the electromagnet.

## Revendications

1. Bloc de soupapes comprenant au moins une soupape magnétique (11) dont l'électroaimant (12) porte, transversalement à son axe longitudinal, un appendice cylindrique (14) muni de contacts embrochables (16), cet appendice avec ses contacts traversant un alésage (15) pour pénétrer à l'intérieur d'un bloc de montage (13) appartenant au bloc de soupape, les contacts (16), dirigés vers le bas, par rapport au bloc de montage (13) et sont reliés électriquement à des contacts correspondants situés à l'intérieur du bloc de montage (13), une bague (18) assurant l'étanchéité entre l'appendice (14) et l'alésage (15), caractérisé en ce que cette bague (18) est à lèvre et que les broches de contact (16) sont enfoncées dans une platine de contact (17) logée dans le bloc de montage (13).

2. Bloc de soupapes selon la revendication 1, caractérisé en ce que la lèvre (18A) de la bague (18) est dirigée vers le haut, c'est-à-dire vers l'électroaimant.

3. Bloc de soupapes selon la revendication 1, caractérisé en ce que le bloc de montage (13) est constitué en forme de un profile étiré, en une ou deux parties.

4. Bloc de soupapes selon une des revendication 1 à 3, caractérisé en ce que l'appendice (14) a, en section transversale, une forme s'écartant d'une forme ronde (ovale par exemple).

5. Bloc de soupapes selon une des revendications 1 à 4, caractérisé en ce que l'appendice cylindrique (14) est légèrement conique.

6. Bloc de soupapes selon une des revendications 1 à 5, caractérisé en ce que l'appendice cylindrique (14) est une pièce intermédiaire distincte, emmanchée et vissée sur la bobine de l'électroaimant.
